# EUROPEAN PATENT APPLICATION

(11) **EP 4 845 254 A1**
(43) Date of publication of application: **25.11.2026**
(21) Application number: 24917681.9
(22) Date of filing: 17.01.2024
(51) Int. Cl.: H04W 72/04, H04L 5/00

(54) **TRANSMISSION CONFIGURATION METHOD AND APPARATUS FOR SENSING SIGNAL, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIANG, Bin, Dongguan, Guangdong 523860 (CN); XU, Jing, Dongguan, Guangdong 523860 (CN); WU, Danyang, Dongguan, Guangdong 523860 (CN)
(74) Representative: Novagraaf Technologies
(86) International application number: PCT/CN2024/072665
(87) International publication number: WO 2025/152054

(57) **Abstract**

A transmission configuration method and apparatus for a sensing signal, a device, and a storage medium, relating to the technical field of communications. The method comprises: first devices receive first information, the first information being used for configuring N first devices to receive sensing signals, and N being an integer greater than 1 (410). A second device sends the first information to the N first devices, when N is greater than 1, the second device sends the first information to the plurality of first devices, by means of the first information, the second device can configure the plurality of first devices to receive the sensing signals, and the plurality of first devices receive the same configuration information (i.e., the first information), so that the plurality of first devices obtain the configuration information at a same time, thereby realizing simultaneous configuration of the plurality of first devices to receive the sensing signals, and reducing the signaling overhead.

## Description

### TECHNICAL FIELD

Embodiments of the present disclosure relate to the technical field of communications, and in particular, to a method for configuring transmission of a sensing signal, and an apparatus, a device, and a storage medium therefor.

### RELATED ART

Using wireless signals for sensing can significantly reduce security and privacy risks (e.g., compared to visual sensors) and effectively gather information in environments unsuitable for other sensors. Leveraging widely deployed wireless communication systems with continuous coverage, such as the 5th Generation (5G) mobile communication system, enables monitoring over a vast area.

However, further discussion and research are needed regarding the transmission of sensory signals.

### SUMMARY

Embodiments of the present disclosure provide a method for configuring transmission of a sensing signal, and an apparatus, a device, and a storage medium therefor. The technical solutions according to the embodiments of the present disclosure are as follows.

According to one aspect of the embodiments of the present disclosure, a method for configuring transmission of a sensing signal is provided. The method is performed by any one of N first devices, and the method includes: receiving first information, wherein the first information is used to configure the N first devices to receive a sensing signal, and N is an integer greater than 1.

According to one aspect of the embodiments of the present disclosure, a method for configuring transmission of a sensing signal is provided. The method is performed by a second device, and the method includes: transmitting first information, wherein the first information is used to configure N first devices to receive a sensing signal, wherein N is an integer greater than 1.

According to one aspect of the embodiments of the present disclosure, an apparatus for configuring transmission of a sensing signal is provided. The apparatus includes: a receiving module, configured to receive first information, wherein the first information is used to configure N first devices to receive a sensing signal, N being an integer greater than 1.

According to one aspect of the embodiments of the present disclosure, an apparatus for configuring transmission of a sensing signal is provided. The apparatus includes: a transmitting module, configured to transmit first information, wherein the first information is used to configure N first devices to receive a sensing signal, N being an integer greater than 1.

According to one aspect of the embodiments of the present disclosure, a communication device is provided. The communication device includes a processor and a memory. The memory is configured to store one or more computer programs, which when executed by the processor, cause the communication device to perform the aforementioned method for configuring transmission of a sensing signal on the first device side, or to perform the aforementioned method for configuring transmission of a sensing signal on the second device side.

According to one aspect of the embodiments of the present disclosure, a computer-readable storage medium is provided. The computer-readable storage medium stores one or more computer programs, which when executed by a processor, cause the processor to perform the aforementioned method for configuring transmission of a sensing signal on the first device side, or to perform the aforementioned method for configuring transmission of a sensing signal on the second device side.

According to one aspect of the embodiments of the present disclosure, a chip is provided. The chip includes programmable logic circuitry and/or one or more program instructions. The chip, when running, is caused to perform the aforementioned method for configuring transmission of a sensing signal on the first device side, or to perform the aforementioned method for configuring transmission of a sensing signal on the second device side.

According to one aspect of the embodiments of the present disclosure, a computer program product is provided. The computer program product includes one or more computer instructions stored in a computer-readable storage medium. The one or more computer instructions, when read from the computer-readable storage medium and executed by a processor, cause the processor to perform the aforementioned method for configuring transmission of a sensing signal on the first device side, or to perform the aforementioned method for configuring transmission of a sensing signal on the second device side.

The technical solutions according to the embodiments of the present disclosure may include the following beneficial effects: The second device transmits first information to N first devices. When N is greater than 1, the second device transmits the first information to multiple first devices. Through this first information, the second device can configure multiple first devices to receive sensing signals. These multiple first devices receive the same configuration information (i.e., the first information), ensuring that they obtain this configuration information at the same time. This achieves simultaneous configuration of multiple first devices to receive sensing signals and saves signaling overhead.

### BRIEF DESCRIPTION OF DRAWINGS

FIG. 1 is a schematic diagram of a network architecture according to some embodiments of the present disclosure;
FIG. 2 is a schematic diagram of eight sensing modes according to some embodiments of the present disclosure;
FIG. 3 is a schematic diagram of a sensing system including multiple sensing nodes, as according to some embodiments of the present disclosure;
FIG. 4 is a flowchart of a method for configuring transmission of a sensing signal according to some embodiments of the present disclosure;
FIG. 5 is a schematic diagram of first information including a set of sensing configuration information according to some embodiments of the present disclosure;
FIG. 6 is a schematic diagram of first information including multiple sets of sensing configuration information according to some embodiments of the present disclosure;
FIG. 7 is a schematic diagram of first information including multiple sets of sensing configuration information according to some embodiments of the present disclosure;
FIG. 8 is a block diagram of an apparatus for configuring transmission of a sensing signal according to some embodiments of the present disclosure;
FIG. 9 is a block diagram of an apparatus for configuring transmission of a sensing signal according to some embodiments of the present disclosure; and
FIG. 10 is a schematic structural diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with the evolution of the network architecture and emergence of new service scenarios, the technical solutions according to the embodiments of the present disclosure are also applicable to similar technical problems.

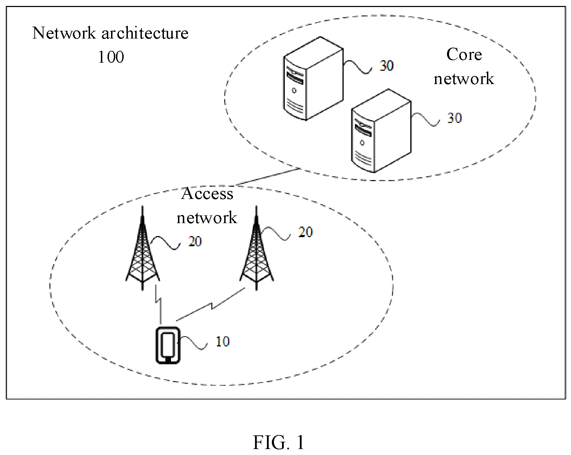

Please refer to FIG. 1, which illustrates a schematic diagram of a network architecture 100 according to some embodiments of the present disclosure. The network architecture 100 may include: a terminal device 10, an access network device 20, and a core network element 30.

The terminal device 10 may refer to a User Equipment (UE), an access terminal, a user unit, a user station, a mobile station, a remote station, a remote terminal, a mobile device, a wireless communication device, a user agent, or a user apparatus. In some embodiments, the terminal device 10 may also be a cellular phone, a cordless phone, a Session Initiation Protocol(SIP) phone, a Wireless Local Loop(WLL) station, a Personal Digital Assistant(PDA), a handheld device with wireless communication function, a computing device, or other processing device connected to a wireless modem, a vehicular device, a wearable device, a terminal device in 5th Generation System (5GS), a terminal device in a future-evolved Public Land Mobile Network(PLMN), etc. The embodiments of the present disclosure are not limited to these. For ease of description, the aforementioned devices are collectively referred to as terminal devices. Typically, there are multiple terminal devices 10, and one or more terminal devices 10 may be distributed within the cell managed by each access network device 20. The terminal device may also be referred to simply as a terminal or UE, and those skilled in the art can understand its meaning.

The access network device 20 is a device deployed in the access network to provide wireless communication functions for the terminal device 10. The access network device 20 may include various forms of macro base stations, micro base stations, relay stations, access points, and the like. In systems employing different radio access technologies, the names of devices with access network device functions may vary. For example, in a 5G NR system, it is called gNodeB or gNB. As communication technology evolves, the name "access network device" may change. For ease of description, in the embodiments of the present disclosure, the aforementioned devices that provide wireless communication functions for the terminal device 10 are collectively referred to as access network devices. In some embodiments, a communication relationship can be established between the terminal device 10 and the core network element 30 through the access network device 20. Illustratively, in a Long Term Evolution (LTE) system, the access network device 20 may be an Evolved Universal Terrestrial Radio Access Network (EUTRAN) or one or more eNodeBs in the EUTRAN; in a 5G NR system, the access network device 20 may be a Radio Access Network (RAN) or one or more gNBs in the RAN. In the embodiments of the present disclosure, unless otherwise specified, the term "network device" refers to the access network device 20, such as a base station.

The core network element 30 is a network element deployed in the core network. The main functions of the core network element 30 are to provide user connections, user management, and bearer services, and to serve as an interface for connecting the bearer network to external networks. For example, the core network elements in the 5G NR system may include an Access and Mobility Management Function (AMF) entity, a User Plane Function (UPF) entity, a Session Management Function (SMF) entity, and other network elements.

Integrated sensing and communication refers to the integration of communication and sensing functions, enabling future communication systems to simultaneously possess both communication and sensing capabilities. By actively recognizing and analyzing the characteristics of the wireless channel while transmitting information, the system can sense the physical features of the surrounding environment, thereby enhancing both communication and sensing functions. For instance, by using base station signals to sense surrounding environmental information, communication links can be designed to avoid certain obstacles, thereby improving communication performance.

The next-generation networks (such as B5G and 6G networks) are expected to be an integration of mobile communication networks, sensing networks, and computing power networks. In a narrow sense, a sensing network refers to a system capable of performing target localization (ranging, speed measurement, angle measurement), target imaging, target detection, target tracking, and target identification. In a broad sense, a sensing network refers to a system capable of perceiving all attributes and states of services, networks, users, terminals, and environmental objects. From the perspective of sensing applications, sensing can be classified into the following categories.

Outdoor, wide-area, or local-area applications: including smart cities (such as weather monitoring), smart transportation/high-speed rail (such as high-precision map construction, road surveillance, intrusion detection), low-altitude applications (such as drone monitoring and obstacle avoidance, flight intrusion detection, flight path management), etc.

Indoor or local area applications: including smart home and health management (such as respiratory monitoring, intrusion detection, gesture/posture recognition, movement monitoring, mobile trajectory tracking, etc.), smart factories (such as intrusion detection, material detection, item defect detection, etc.).

The above is merely exemplary, providing some classifications of sensing applications. The application areas of sensing are not limited to the examples provided.

Wireless communication and sensing are two major applications of modern radio frequency technology. Sensing utilizes radio waves to detect parameters of the physical environment, enabling environmental sensing such as target localization, action recognition, and imaging. Traditional sensing and wireless communication exist independently, and the separated design results in waste of wireless spectrum and hardware resources. In the era of Beyond 5G (B5G) and 6G, communication spectrum has evolved towards millimeter-wave, terahertz, and visible-light communications. In the future, the spectrum for wireless communication will overlap with the traditional sensing spectrum. The integrated sensing and communication technology integrates the two functions of wireless communication and sensing, allowing the use of wireless resources from wireless communication to achieve sensing functions; utilizing widely deployed cellular networks to enable sensing services in larger areas; utilizing base stations and multiple terminals for joint sensing to achieve higher sensing accuracy; and reusing hardware modules from wireless communication to implement sensing functions and reduce costs. In summary, the integrated sensing and communication technology enables future wireless communication systems to have sensing capabilities, providing a foundation for the development of future services such as smart transportation, smart cities, smart factories, and unmanned aerial vehicles.

The "sensing" mentioned in the embodiments of the present disclosure refers to the process of directly or indirectly obtaining sensing information about a target or environment based on at least one type of sensing signal, such as acoustic waves, electromagnetic waves, or light waves (including but not limited to laser). For example, by transmitting and receiving sensing signals, and performing measurement or other processing on the sensing signals, sensing information about the target or environment can be obtained, such as achieving localization, range measurement, speed measurement, angle measurement, target imaging, target detection, target tracking, target identification, and other services.

In addition, the term "sensing" mentioned in the embodiments of the present disclosure can also be replaced by any other terms that can express the meaning related to sensing, such as localization, range measurement, speed measurement, angle measurement, target imaging, target detection, target tracking, and target identification.

The nodes involved in sensing are as follows.

Sensing transmitter node: The transmitter node of the sensing signal.

Sensing receiver node: The receiver node of the sensing signal.

Sensing node: Both the sensing transmitter node and the sensing receiver node are collectively referred to as sensing nodes, which are nodes that perform sensing.

Sensing management node: A node responsible for managing and controlling sensing tasks. The sensing management node assigns sensing tasks to sensing nodes, which feed back sensing results to the sensing management node after performing sensing.

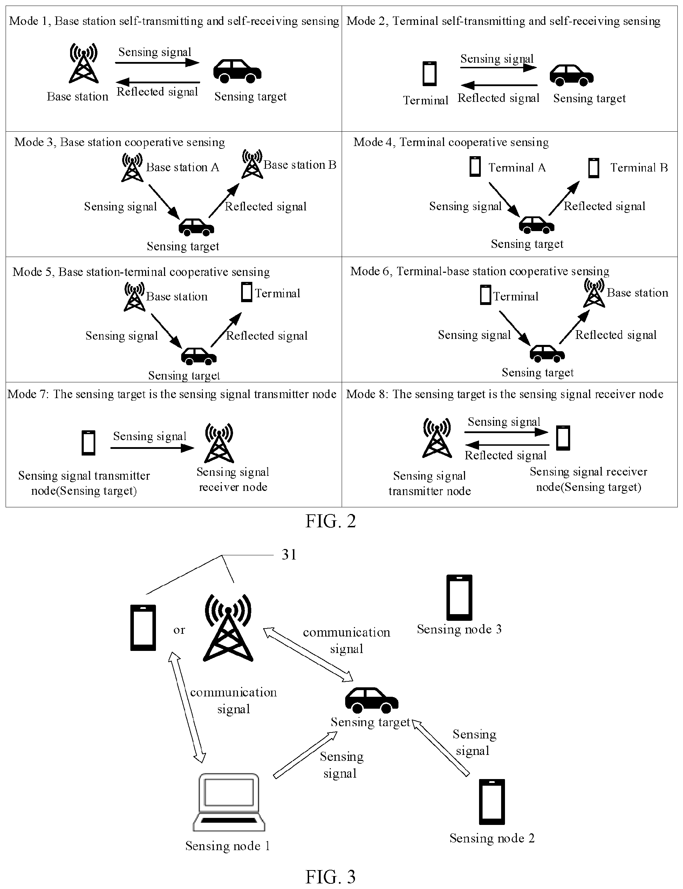

Sensing can be divided into eight modes as shown in FIG. 2.

Mode 1, base station self-transmitting and self-receiving sensing: The base station transmits a sensing signal and receives the reflected signal. In Mode 1, the sensing transmitter node and the sensing receiver node are the same base station. That is, the base station transmits a sensing signal to the sensing target, and after the sensing signal is reflected by the sensing target, the same base station receives the reflected signal (i.e., the sensing signal after being reflected by the sensing target) .

Mode 2, terminal self-transmitting and self-receiving sensing: The terminal transmits a sensing signal and receives the reflected signal. In Mode 2, the sensing transmitter node and the sensing receiver node are the same terminal. That is, the terminal transmits a sensing signal to the sensing target, and after the sensing signal is reflected by the sensing target, the same terminal receives the reflected signal.

Mode 3, base station cooperative sensing: One base station (such as base station A in the figure) transmits a sensing signal, while another base station (such as base station B in the figure) receives the reflected signal. In Mode 3, the sensing transmitter node and the sensing receiver node are different base stations. That is, one base station transmits a sensing signal to the sensing target, and after the sensing signal is reflected by the sensing target, another base station receives the reflected signal.

Mode 4, terminal cooperative sensing: One terminal (such as terminal A in the figure) transmits a sensing signal, while another terminal (such as terminal B in the figure) receives the reflected signal. In Mode 4, the sensing transmitter node and the sensing receiver node are different terminals. That is, one terminal transmits a sensing signal to the sensing target, and after the sensing signal is reflected by the sensing target, another terminal receives the reflected signal.

Mode 5, base station-terminal cooperative sensing: The base station transmits a sensing signal, and the terminal receives the reflected signal. In Mode 5, the sensing transmitter node is the base station, and the sensing receiver node is the terminal. That is, the base station transmits a sensing signal to the sensing target, and after the sensing signal is reflected by the sensing target, the terminal receives the reflected signal.

Mode 6, terminal-base station cooperative sensing: The terminal transmits a sensing signal, and the base station receives the reflected signal. In Mode 6, the sensing transmitter node is the terminal, and the sensing receiver node is the base station. That is, the terminal transmits a sensing signal to the sensing target, and after the sensing signal is reflected by the sensing target, the base station receives the reflected signal.

Mode 7, the sensing target is the sensing signal transmitter node. In Mode 7, the sensing transmitter node is the terminal, and the sensing receiver node is the base station. Since the sensing target (terminal) is the sensing transmitter node, after the sensing signal is transmitted from the sensing transmitter node (terminal) to the sensing receiver node (base station), the base station may directly parse the sensing result upon receiving the sensing signal without reflection.

Mode 8, the sensing target is the sensing signal receiver node. In Mode 8, the sensing transmitter node is the base station, and the sensing receiver node is the terminal. Since the sensing target (terminal) is the sensing receiver node, after receiving the sensing signal, the terminal needs to feed back the sensing result to the base station, enabling the base station to obtain the sensing result.

It should be noted that, for ease of reference, in the embodiments of the present disclosure, the reflected signal in FIG. 2 is also referred to as the sensing signal.

The transmitter node and the receiver node of the sensing signal can be collectively referred to as the sensing node. In the above eight sensing modes, there is only one or a pair of sensing nodes. However, in wireless communication systems, there are a large number of terminal devices (such as mobile phones, IoT devices, etc.). When multiple sensing nodes (i.e., base stations, mobile phones, IoT devices, etc., that can transmit and/or receive sensing signals) exist around a sensed object, the joint participation of multiple sensing nodes in sensing can improve the accuracy of sensing and meet more complex sensing service requirements, providing richer sensing services. As shown in FIG. 3, when there are multiple sensing nodes (such as sensing node 1, sensing node 2, and sensing node 3 in FIG. 3) within the system, there may be a sensing control node 31 to control and manage the entire sensing service to improve efficiency. This sensing control node 31 can be a base station, a terminal device, or a core network element.

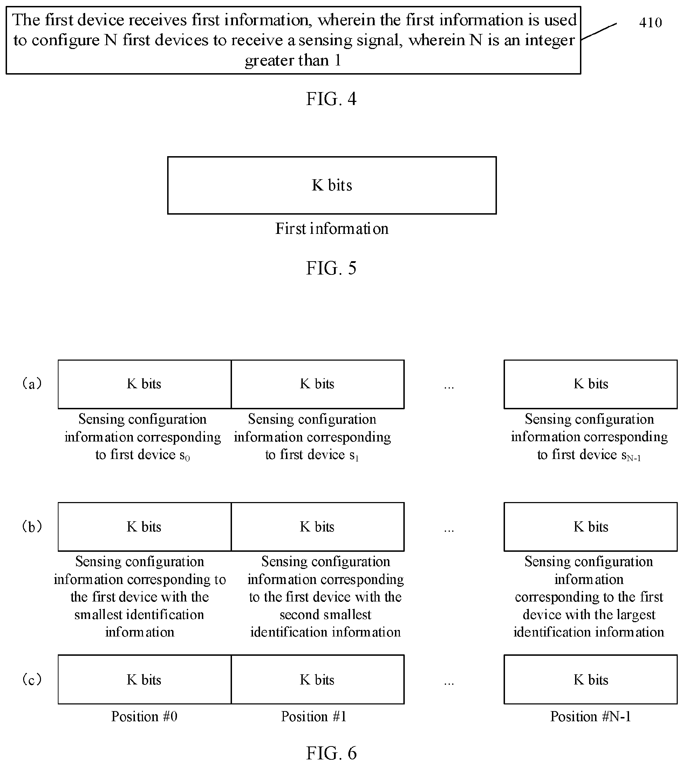

Please refer to FIG. 4, which illustrates a flowchart of a method for configuring transmission of a sensing signal according to some embodiments of the present disclosure. This method can be applied to the network architecture shown in FIG. 1. The method can be performed by any one of N first devices. The method may include the following step 410.

Step 410: The first device receives first information, wherein the first information is used to configure N first devices to receive a sensing signal, wherein N is an integer greater than 1.

The first device is a device configured to receive a sensing signal. In the embodiments of the present disclosure, the number of first devices is N, wherein N is an integer greater than or equal to 1, that is, the number of first devices can be one or multiple. In the embodiments of the present disclosure, the description is mainly focused on the case where the number of first devices is multiple (i.e., N is greater than 1).

The first device can be either a terminal device or a network device (such as a base station). The implementation of the terminal device can vary under different sensing modes. For instance, in the base station self-transmitting and self-receiving sensing mode, base station cooperative sensing mode, and terminal-base station cooperative sensing mode, the first device is the base station. Conversely, in the terminal self-transmitting and self-receiving sensing mode, terminal cooperative sensing mode, and base station-terminal cooperative sensing mode, the first device is the terminal device.

In some embodiments, the third device is configured to transmit a sensing signal, while the first device is configured to receive the sensing signal transmitted by the third device. Illustratively, the third device is configured to transmit a sensing signal to a sensing target, and the sensing signal is reflected by the sensing target and subsequently received by the first device. Furthermore, the number of third devices can be either one or multiple, and this is not limited in the present disclosure.

The third device can be either a terminal device or a network device (such as a base station). The implementation of the third device can vary under different sensing modes. For instance, in the base station self-transmitting and self-receiving sensing mode, base station cooperative sensing mode, and base station-terminal cooperative sensing mode, the third device is the base station. Alternatively, in the terminal self-transmitting and self-receiving sensing mode, terminal cooperative sensing mode, and terminal-base station cooperative sensing mode, the third device is the terminal device.

In some embodiments, the aforementioned N first devices may or may not include a third device. When the N first devices include a third device, the third device is configured to both transmit and receive a sensing signal. For example, in the base station self-transmitting and self-receiving sensing mode, the base station is configured to both transmit and receive a sensing signal. Alternatively, in the terminal self-transmitting and self-receiving sensing mode, the terminal device is configured to both transmit and receive a sensing signal. When the N first devices do not include a third device, the third device is configured to transmit but not to receive a sensing signal.

In some embodiments, the second device transmits the first information, and correspondingly, the first device receives the first information transmitted by the second device. The second device is used to configure the sensing signal, such as for configuring the reception and/or transmission of the sensing signal. The second device can be the first device, a third device, or another device other than the first and third devices, which is not limited in the present disclosure. Additionally, the second device can be a terminal device, a network device (such as a base station), or a core network element.

In the embodiments of the present disclosure, a second device transmits first information to N first devices. When N is greater than 1, the second device transmits the first information to multiple first devices. Through this first information, the second device can configure multiple first devices to receive a sensing signal. These multiple first devices receive the same configuration information (i.e., the first information), ensuring that they obtain this configuration information at the same time. This achieves simultaneous configuration of multiple first devices to receive a sensing signal and saves signaling overhead.

In some embodiments, the aforementioned N first devices are configured to receive the same sensing signal. The same sensing signal may refer to a sensing signal with the same frequency-domain position and time-domain position, or a sensing signal with the same sequence. For instance, the third device transmits a sensing signal, which, after being reflected by the sensing target, is received by multiple first devices. In this scenario, multiple first devices receive the same sensing signal.

In some embodiments, the aforementioned N first devices are configured to receive different sensing signals. The different sensing signals may refer to sensing signals with different frequency-domain positions and/or time domain positions, or sensing signals with different sequences. For instance, the same third device transmits different sensing signals at different frequency-domain positions and/or time-domain positions. After being reflected by the sensing target, these different sensing signals are received by multiple first devices. In this scenario, multiple first devices receive different sensing signals. Another example is that different third devices transmit different sensing signals at different frequency-domain positions and/or time-domain positions. After being reflected by the sensing target, these different sensing signals are received by multiple first devices. In this scenario, multiple first devices receive different sensing signals.

In some embodiments, the aforementioned N first devices are configured to receive different sensing signals, and the different sensing signals are used to sense the same sensing target. Naturally, in other embodiments, these different sensing signals may also be used to sense different sensing targets, and this is not limited in the present disclosure.

The technical solution according to the embodiments of the present disclosure is applicable to scenarios where multiple first devices receive the same sensing signal, or where multiple first devices receive different sensing signals.

In some embodiments, the aforementioned N first devices are determined based on at least one of: the location of each first device, the distance between each first device and the third device, the link status between each first device and the third device, and the sensing service requirement, wherein the third device is configured to transmit a sensing signal. The link status may be represented by path loss, received power, received signal-to-noise ratio, etc., which is not limited in the present disclosure.

Illustratively, the second device selects N first devices that receive the same sensing signal based on factors such as the location of each first device, the distance between each first device and the third device, the link status between each first device and the third device, and the sensing service requirement. The second device then configures the same Radio Network Temporary Identifier (RNTI) for these N first devices to receive the first information. This approach allows for flexible adjustment of the first devices receiving the sensing signal according to the environment and link status, optimizing the sensing signal reception and sensing process, and improving sensing efficiency and result accuracy.

Next, the composition mode of the first information is introduced and explained. In the embodiments of the present disclosure, the first information includes the following possible composition modes.

Composition mode 1: The first information includes a set of sensing configuration information, and N first devices share the same set of sensing configuration information, wherein the sensing configuration information is used to configure the first devices to receive a sensing signal.

For this composition mode 1, N first devices share the same set of sensing configuration information, and these N first devices receive sensing signals based on the same set of sensing configuration information. Taking N equals to 3 as an example, the first device A, the first device B, and the first device C share the same set of sensing configuration information.

In some embodiments, a set of sensing configuration information is used to configure at least one of: enabling reception of a sensing signal, a time-domain position of a sensing signal, a frequency-domain position of a sensing signal, or whether a sensing signal is periodic.

Enabling reception of the sensing signal refers to activating the function of the first device to receive the sensing signal, or triggering the first device to receive the sensing signal. The time-domain position of the sensing signal refers to the time-domain resources occupied by the sensing signal, and the frequency-domain position of sensing signal refers to the frequency-domain resources occupied by the sensing signal. Based on the time-domain and frequency-domain positions of the sensing signal, the first device can receive the sensing signal at the aforementioned time-frequency positions. Whether a sensing signal is periodic refers to whether the sensing signal is transmitted at the same time interval within a certain period of time.

In some embodiments, a set of sensing configuration information includes at least one of: enabling configuration information, time-domain position information of the sensing signal, frequency-domain position information of the sensing signal, or periodicity information. The enabling configuration information is used to enable the reception of the sensing signal. The time-domain position information of the sensing signal is used to indicate the time-domain position of the sensing signal. The frequency-domain position information of the sensing signal is used to indicate the frequency-domain position of the sensing signal. The periodicity information is used to indicate the periodicity of the sensing signal transmission, or the time interval for periodic transmission of the sensing signal.

Through the aforementioned method, N first devices share the same set of sensing configuration information, which can significantly reduce signaling overhead.

Composition mode 2: The first information includes N sets of sensing configuration information, which are in one-to-one correspondence with N first devices. Each set of sensing configuration information is used to configure the corresponding first device to receive a sensing signal.

For this composition mode 2, each of the N first devices has an independent set of sensing configuration information. Each first device receives a sensing signal based on its corresponding set of sensing configuration information. Taking N equal to 3 as an example, the first information includes three sets of sensing configuration information, denoted as sensing configuration information 1, sensing configuration information 2, and sensing configuration information 3, which correspond to the first device A, the first device B, and the first device C, respectively. The first device A receives a sensing signal based on sensing configuration information 1, the first device B receives a sensing signal based on sensing configuration information 2, and the first device C receives a sensing signal based on sensing configuration information 3.

In addition, for each set of sensing configuration information, the content it is used to configure can be referred to the introduction in the above composition mode 1, and is not be elaborated here.

Through the aforementioned method, each of the N first devices possesses an independent set of sensing configuration information. The sensing configuration information of multiple first devices can vary, which helps enhance the flexibility of sensing configuration, fulfill flexible sensing signal reception and measurement requirements, and enrich sensing information.

In some embodiments, the arrangement order of the aforementioned N sets of sensing configuration information in the first information is determined based on the order of the N first devices in the device list, wherein the device list is used to indicate the N first devices. Illustratively, taking N equal to 3 as an example, the first information includes 3 sets of sensing configuration information, denoted as sensing configuration information 1, sensing configuration information 2, and sensing configuration information 3, which correspond to the first device A, the first device B, and the first device C, respectively. Assuming that the arrangement order of the aforementioned 3 first devices in the device list is: the first device B, the first device A, and the first device C, then the arrangement order of the aforementioned 3 sets of sensing configuration information in the first information is: sensing configuration information 2, sensing configuration information 1, and sensing configuration information 3.

In some embodiments, the arrangement order of the aforementioned N sets of sensing configuration information in the first information is determined based on the identifier information of the N first devices. Illustratively, the N sets of sensing configuration information are arranged in the first information in ascending order of the identifier information of the respective corresponding first devices, or in descending order of the identifier information of the respective corresponding first devices. For example, assuming N equals 3, the first information includes 3 sets of sensing configuration information, denoted as sensing configuration information 1, sensing configuration information 2, and sensing configuration information 3, which correspond to the first device A, the first device B, and the first device C, respectively. Assuming that the identifier information of the three first devices is in ascending order as the first device C, the first device B, and the first device A, if the N sets of sensing configuration information are arranged in the first information in ascending order of the identifier information of the three first devices, then the arrangement order of the three sets of sensing configuration information in the first information is as follows: sensing configuration information 3, sensing configuration information 2, and sensing configuration information 1.

By the aforementioned method, the arrangement order of N sets of sensing configuration information in the first information is specified, so that the first device can accurately determine its corresponding sensing configuration information after receiving the first information.

Composition mode 3: The first information includes M sets of sensing configuration information, wherein one of the M sets of sensing configuration information corresponds to one or more of the aforementioned N first devices. Each set of sensing configuration information is used to configure the corresponding first device to receive a sensing signal. M is an integer greater than 1 and less than or equal to N.

In some embodiments, the first devices corresponding to the M sets of sensing configuration information mentioned above are mutually different.

It should be understood that the aforementioned composition mode 2 is actually a special case of composition mode 3, that is, in a case where M is equal to N, composition mode 3 is equivalent to composition mode 2. In a case where M is greater than 1 and less than N, one of the M sets of sensing configuration information corresponds to one or more of the N first devices, and there exists at least one set of sensing configuration information corresponding to multiple first devices in the M sets of sensing configuration information.

Taking N equal to 3 and M equal to 2 as an example, the first information includes two sets of sensing configuration information, denoted as sensing configuration information 1 and sensing configuration information 2, wherein sensing configuration information 1 corresponds to the first device A and the first device C, and sensing configuration information 2 corresponds to the first device B. The first device A and the first device C receive sensing signals based on sensing configuration information 1, and the first device C receives sensing signals based on sensing configuration information 2.

Through the aforementioned method, the first device can determine its corresponding sensing configuration information based on the corresponding relationship between the first device and the sensing configuration information. Additionally, allowing multiple first devices to share the same set of sensing configuration information helps to save the bit overhead of the first information.

In some embodiments, N first devices are configured to decode first information using the same RNTI.

In some embodiments, the first information is transmitted over any one of a broadcast channel, a multicast channel, or a downlink control channel. In the embodiments of the present disclosure, the transmission mode of the first information is not limited, and the first information can be transmitted through any of the above channels. For example, the transmission of the broadcast/multicast data channel is scheduled through the broadcast/multicast control channel, and the first information is transmitted on the broadcast/multicast data channel.

In some embodiments, the first information is used to configure the third device to transmit a sensing signal. The second device can transmit the first information to the third device. Correspondingly, the third device receives the first information transmitted by the second device and transmits a sensing signal based on the first information.

In some embodiments, the first information is used to configure N first devices to receive sensing signals and to configure a third device to transmit sensing signals. In this case, the first information can adopt composition mode 1, wherein the first information includes a set of sensing configuration information, and the third device and the N first devices share the same set of sensing configuration information, which is used to configure the N first devices to receive sensing signals and the third device to transmit sensing signals. Alternatively, the first information can adopt composition mode 2 or 3, wherein the first information includes multiple sets of sensing configuration information, each set of sensing configuration information corresponds to at least one device, and the at least one device includes at least one third device and/or at least one first device. Each set of sensing configuration information is used to configure at least one corresponding first device to receive sensing signals and/or configure at least one third device to transmit sensing signals. Alternatively, the first information can adopt composition mode 2 or composition mode 3, where the first information includes multiple sets of sensing configuration information, each set of sensing configuration information corresponds to at least one first device, and each set of sensing configuration information is used to configure at least one corresponding first device to receive sensing signals, and each set of sensing configuration information is also used to configure the third device to transmit a sensing signal to the corresponding at least one first device based on the set of sensing configuration information. In addition, the above-mentioned set of sensing configuration information is used to configure at least one of: enabling reception and/or transmission of the sensing signal, the time-domain position of the sensing signal, the frequency-domain position of the sensing signal, or whether the sensing signal is periodic.

Through the aforementioned method, the first information can be used not only for configuring the first device to receive a sensing signal, but also for configuring the third device to transmit a sensing signal. This enables the simultaneous configuration of multiple devices to receive and/or transmit sensing signals, thereby saving signaling overhead.

In some embodiments, the third device and the first device are configured to decode the first information using the same RNTI; alternatively, the third device and the first device are configured to decode the first information using different RNTIs. Whether the third device and the first device use the same or different RNTIs can be configured by the second device or specified by the protocol, and this is not limited in the present disclosure.

In some embodiments, the second device transmits second information, which is used to configure the first information. Correspondingly, the first device and/or the third device receives the second information. By transmitting the second information, the second device enables the first device and/or the third device to accurately receive and interpret the first information based on the second information.

In some embodiments, the second information is used to configure at least one of the following: (1) A composition mode of the first information; (2) Transmission mode of the first information; (3) The number of bits of the first information; (4) A device list corresponding to the first information, the device list indicating N first devices; (5) The device quantity corresponding to the first information, wherein the device quantity refers to the number of first devices receiving the first information; (6) The number of bits for each of one or M groups of sensing configuration information included in the first information; (7) The position of a set of sensing configuration information corresponding to the first device receiving the second information in the first information.

The composition mode of the first information can be either the aforementioned composition mode 1, composition mode 2, or composition mode 3. The transmission mode of the first information can be any of the broadcast channel, multicast channel, or downlink control channel introduced above. In some embodiments, the composition mode and/or transmission mode of the first information may also be configured not through the second information, but specified by protocol, which is not limited in the present disclosure.

In addition, for the aforementioned composition mode 2 or composition mode 3, when the first information includes multiple sets of sensing configuration information, the number of bits for these multiple sets of sensing configuration information can either be the same or different, and this is not limited in the present disclosure. For example, the first information includes 3 sets of sensing configuration information, and the number of bits for these 3 sets of sensing configuration information is the same, all being a bit, wherein a is a positive integer. Another example is that the first information includes 3 sets of sensing configuration information, and the number of bits for these 3 sets of sensing configuration information is different, such as the number of bits for these 3 sets of sensing configuration information being a bit, b bit, and c bit respectively, wherein a, b, and c are positive integers, and a, b, and c are all different or partially different.

In addition, for the aforementioned composition mode 2 or composition mode 3, the position of a set of sensing configuration information corresponding to the first device receiving the second information in the first information can be configured in the second information.

Through the aforementioned method, the first device can accurately receive and interpret the first information based on the second information.

In some exemplary embodiments, the first information adopts the aforementioned composition mode 1. The first device receives the second information, which includes: the number of bits of the first information, the RNTI used for receiving the first information, and the device list corresponding to the first information. The first information only contains one set of sensing configuration information, and the N first devices receiving the first information share this same set of sensing configuration information. For example, as shown in FIG. 5, the first information contains K bits. When receiving this first information, the first device uses the aforementioned configured RNTI to descramble and obtain a set of sensing configuration information for use in receiving a sensing signal by the first device. Optionally, when receiving this first information, the third device uses the aforementioned configured RNTI to descramble and obtain a set of sensing configuration information for use in transmitting a sensing signal.

In some exemplary embodiments, the first information adopts the aforementioned composition mode 2, and the number of bits for a set of sensing configuration information corresponding to each first device is the same. The first device receives second information, which includes: the number of bits of the first information, the RNTI used for receiving the first information, the device list corresponding to the first information, and the number of bits for a set of sensing configuration information corresponding to each first device. The number of bits of the first information is L, which can be understood as the number of bits of effective information contained in the first information. The device list includes identifier information for each first device receiving the first information, such as {s₀, s₁, ..., s_{N-1}}, representing the identifier information for N first devices. If the number of bits for a set of sensing configuration information corresponding to each first device is the same, then only one value, such as K, needs to be configured for the number of bits for a set of sensing configuration information corresponding to each first device in the second information. Furthermore, the arrangement order of the N sets of sensing configuration information corresponding to the N first devices in the first information can be configured in the second information or specified by protocol. For example, as shown in sub-figure (a) of FIG. 6, the arrangement order of the N sets of sensing configuration information corresponding to the N first devices in the first information is determined according to the order of the N first devices in the device list. Alternatively, as shown in sub-figure (b) of FIG. 6, the arrangement order of the N sets of sensing configuration information corresponding to the N first devices in the first information is determined according to the order of the identifier information of the N first devices from small to large or from large to small. When receiving the first information, the first device uses the configured RNTI to descramble. In a case where N+1 sets of sensing configuration information are obtained, N sets of sensing configuration information correspond to the N first devices, and the remaining 1 set of sensing configuration information corresponds to a third device. Alternatively, when receiving the first information, the first device uses the configured RNTI to descramble and obtain N sets of sensing configuration information, wherein N sets of sensing configuration information correspond to the N first devices and also correspond to the same third device, that is, the aforementioned N sets of sensing configuration information are used to configure the third device to transmit sensing signals to the N first devices respectively, and to configure the corresponding first devices to receive the sensing signals. The first device determines its own corresponding set of sensing configuration information based on its position in the device list or the size of its identifier information, for use in receiving a sensing signal.

In addition, the second information can include the bit number L of the first information, the bit number K of a set of sensing configuration information corresponding to each first device, and the position information of a set of sensing configuration information corresponding to the first device currently receiving the second information in the first information. For example, the set of sensing configuration information corresponding to the first device currently receiving the second information is the x-th set of sensing configuration information in the first information. The second information may or may not include a device list corresponding to the first information. In this case, as shown in sub-figure (c) of FIG. 6, the first information consists of N+1 sets or (L/K) sets of K-bit sensing configuration information. When receiving the first information, the first device determines its own set of sensing configuration information at the corresponding position according to the configuration.

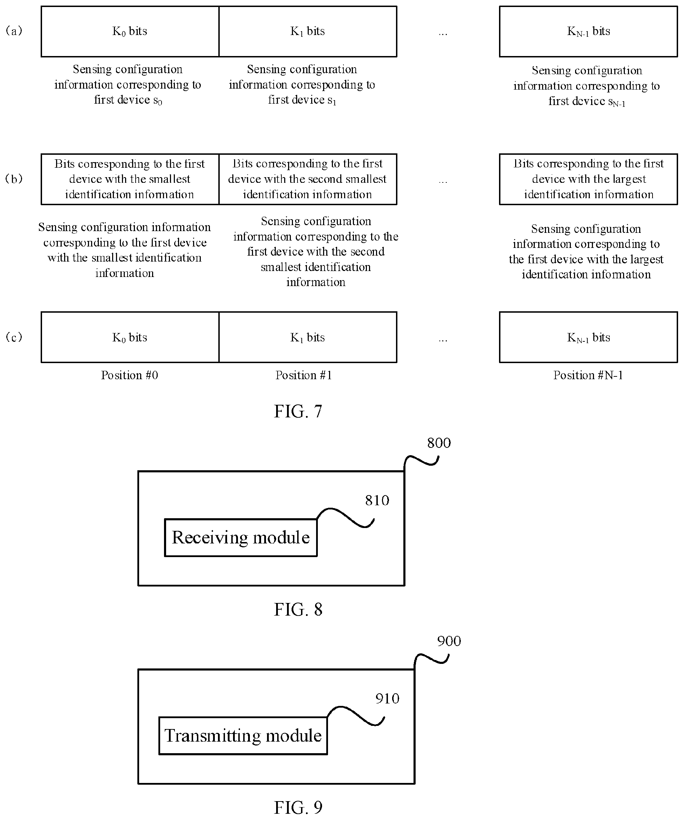

In some exemplary embodiments, the first information adopts the aforementioned composition mode 2, and the number of bits for a set of sensing configuration information corresponding to each first device varies. The first device receives second information, which includes: the number of bits of the first information, the RNTI used for receiving the first information, the device list corresponding to the first information, and the number of bits for a set of sensing configuration information corresponding to each first device. The number of bits of the first information is L, which can be understood as the number of bits of valid information contained in the first information. The device list includes identifier information for each first device receiving the first information, such as {s₀, s₁, ..., s_{N-1}}, representing the identifier information for each of the N first devices. If the number of bits for a set of sensing configuration information corresponding to each first device varies, the number of bits for a set of sensing configuration information corresponding to each first device needs to be configured in the second information, such as including K₀, K₁, ..., K_{N-1}. Furthermore, the arrangement order of the N sets of sensing configuration information corresponding to the N first devices in the first information can be configured in the second information or specified by protocol. For example, as shown in sub-figure (a) of FIG. 7, the arrangement order of the N sets of sensing configuration information corresponding to the N first devices in the first information is determined according to the order of the N first devices in the device list. Another example is shown in sub-figure (b) of FIG. 7, where the arrangement order of a set of sensing configuration information corresponding to the N first devices in the first information is determined according to the order of the identifier information for the N first devices, either from small to large or from large to small. When receiving the first information, the first device uses the configured RNTI to descramble. In a case where N+1 sets of sensing configuration information are obtained, N sets of sensing configuration information correspond to the N first devices, and the remaining 1 set of sensing configuration information corresponds to a third device. The first device determines its corresponding set of sensing configuration information based on its position in the device list or the size of its identifier information, for use in receiving a sensing signal.

In addition, the second information can include the bit number L of the first information, the bit numbers K₀, K₁, ..., K_{N-1} of a set of sensing configuration information corresponding to each first device, and the position information of a set of sensing configuration information corresponding to the first device currently receiving the second information in the first information. For example, the set of sensing configuration information corresponding to the first device currently receiving the second information is the x-th set of sensing configuration information in the first information. The second information can include or exclude a device list corresponding to the first information. In this case, as shown in sub-figure (c) of FIG. 7, the first information consists of N+1 sets of sensing configuration information with bit numbers K₀, K₁, ..., K_{N-1}, respectively. When receiving the information, the first device determines its own set of sensing configuration information at the corresponding position based on the configuration.

The technical solution according to the embodiments of the present disclosure involves a second device transmitting first information to N first devices. When N is greater than 1, the second device transmits the first information to multiple first devices. Through this first information, the second device can configure multiple first devices to receive sensing signals. These multiple first devices receive the same configuration information (i.e., the first information), ensuring that they obtain this configuration information at the same time. This achieves simultaneous configuration of multiple first devices to receive sensing signals and can save signaling overhead.

It should be noted that in the above method embodiments, the steps performed by the first device can be implemented separately as a method for configuring transmission of a sensing signal on the first device side; the steps performed by the second device can be implemented separately as a method for configuring transmission of the sensing signal on the second device side.

The following are apparatus embodiments of the present disclosure, which can be used to implement the method embodiments of the present disclosure. For details not disclosed in the apparatus embodiments of the present disclosure, please refer to the method embodiments of the present disclosure.

Please refer to FIG. 8, which illustrates a block diagram of an apparatus for configuring transmission of a sensing signal according to some embodiments of the present disclosure. This apparatus has the function of implementing the aforementioned method for configuring transmission of a sensing signal on the first device side. This function can be implemented through hardware or through software executed by hardware. The apparatus can be the aforementioned first device, or the apparatus can be disposed in the first device. This apparatus 800 may include a receiving module 810.

The receiving module 810 is configured to receive first information. The first information is used to configure N first devices to receive a sensing signal, wherein N is an integer greater than 1.

In some embodiments, the first information includes a set of sensing configuration information, and the N first devices share the same set of sensing configuration information, wherein the sensing configuration information is used to configure the first device to receive the sensing signal.

In some embodiments, the first information includes M sets of sensing configuration information, one of the M sets of sensing configuration information corresponds to one or more of the N first devices. Each set of sensing configuration information is used to configure the corresponding first device to receive the sensing signal, wherein M is an integer greater than 1 and less than or equal to N.

In some embodiments, in a case where M is equal to N, the first information includes N sets of sensing configuration information; the arrangement order of the N sets of sensing configuration information in the first information is determined based on the order of the N first devices in a device list, wherein the device list is used to indicate the N first devices; alternatively, the arrangement order of the N sets of sensing configuration information in the first information is determined based on the identifier information of the N first devices.

In some embodiments, the sensing configuration information is used to configure at least one of: enabling reception of the sensing signal, the time-domain position of the sensing signal, the frequency-domain position of the sensing signal, or whether the sensing signal is periodic.

In some embodiments, the N first devices are configured to decode the first information using the same RNTI.

In some embodiments, the receiving module 810 is further configured to receive second information, wherein the second information is used to configure the first information.

In some embodiments, the second information is used to configure at least one of: a composition mode of the first information; the transmission mode of the first information; the number of bits of the first information; the device list corresponding to the first information, wherein the device list is used to indicate the N first devices; the device quantity corresponding to the first information, where the device quantity refers to the number of first devices receiving the first information; the number of bits of each of one or M sets of sensing configuration information included in the first information, wherein M is an integer greater than 1 and less than or equal to N; or the position of the sensing configuration information corresponding to the first device receiving the second information in the first information.

In some embodiments, the first information is transmitted over any one of a broadcast channel, a multicast channel, or a downlink control channel.

In some embodiments, the first information is further used to configure a third device to transmit the sensing signal.

In some embodiments, the third device and the first device are configured to decode the first information using the same RNTI; alternatively, the third device and the first device are configured to decode the first information using different RNTIs.

In some embodiments, the N first devices are configured to receive the same sensing signal; alternatively, the N first devices are configured to receive different sensing signals.

In some embodiments, the N first devices are determined based on at least one of: the location of each of the first devices, the distance between each of the first devices and a third device, the link status between each of the first devices and the third device, or the sensing service requirement, wherein the third device is configured to transmit the sensing signal.

Please refer to FIG. 9, which illustrates a block diagram of an apparatus for configuring transmission of a sensing signal according to some embodiments of the present disclosure. This apparatus possesses the functionality of implementing the aforementioned method for configuring transmission of a sensing signal on the second device side. This functionality can be realized through hardware or software executed by hardware. The apparatus can be the aforementioned second device, or the apparatus can be disposed in the second device. This apparatus 900 may include a transmitting module 910.

The transmitting module 910 is configured to transmit first information. The first information is used to configure N first devices to receive a sensing signal, wherein N is an integer greater than 1.

In some embodiments, the first information includes a set of sensing configuration information, and the N first devices share the same set of sensing configuration information, wherein the sensing configuration information is used to configure the first device to receive the sensing signal.

In some embodiments, the first information includes M sets of sensing configuration information, one of the M sets of sensing configuration information corresponds to one or more of the N first devices, and each of the M sets of sensing configuration information is used to configure the corresponding first device to receive the sensing signal, wherein M is an integer greater than 1 and less than or equal to N.

In some embodiments, in a case where M is equal to N, the first information includes N sets of sensing configuration information; the arrangement order of the N sets of sensing configuration information in the first information is determined based on the order of the N first devices in a device list, wherein the device list is used to indicate the N first devices; alternatively, the arrangement order of the N sets of sensing configuration information in the first information is determined based on the identifier information of the N first devices.

In some embodiments, the sensing configuration information is used to configure at least one of: enabling reception of the sensing signal, the time-domain position of the sensing signal, the frequency-domain position of the sensing signal, or whether the sensing signal is periodic.

In some embodiments, the N first devices are configured to decode the first information using the same RNTI.

In some embodiments, the transmitting module 910 is further configured to transmit second information, wherein the second information is used to configure the first information.

In some embodiments, the second information is used to configure at least one of: a composition mode of the first information; the transmission mode of the first information; the number of bits of the first information; the device list corresponding to the first information, wherein the device list is used to indicate the N first devices; the device quantity corresponding to the first information, wherein the device quantity refers to the number of first devices receiving the first information; the number of bits of each of one or M sets of sensing configuration information included in the first information, wherein M is an integer greater than 1 and less than or equal to N; or the position of the sensing configuration information corresponding to the first device receiving the second information in the first information.

In some embodiments, the first information is transmitted over any one of a broadcast channel, a multicast channel, or a downlink control channel.

In some embodiments, the first information is further used to configure a third device to transmit the sensing signal.

In some embodiments, the third device and the first device are configured to decode the first information using the same RNTI; alternatively, the third device and the first device are configured to decode the first information using different RNTIs.

In some embodiments, the N first devices are configured to receive the same sensing signal; alternatively, the N first devices are configured to receive different sensing signals.

In some embodiments, the N first devices are determined based on at least one of: the location of each of the first devices, the distance between each of the first devices and a third device, the link status between each of the first devices and the third device, and the sensing service requirement, wherein the third device is configured to transmit the sensing signal.

It should be noted that the apparatus according to the above embodiments is exemplified only by the division of the various functional modules when achieving its functions. In practical applications, the above functions can be allocated to different functional modules according to actual needs, that is, the content structure of the apparatus can be divided into different functional modules to complete all or part of the functions described above.

Regarding the apparatus in the aforementioned embodiments, the specific ways in which each module performs operations have been described in detail in the embodiments related to the method, and are not elaborated here. For details not specifically described in the apparatus embodiments, reference can be made to the aforementioned method embodiments.

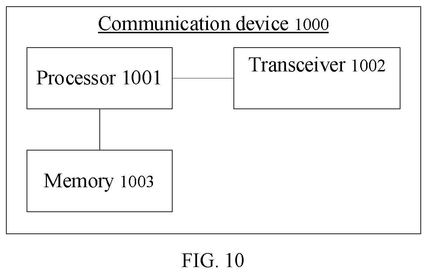

Please refer to FIG. 10, which illustrates the schematic structural diagram of a communication device 1000 according to some embodiments of the present disclosure. The communication device 1000 can be used to perform the method steps performed by the first device in the above embodiments, and can also perform the method steps performed by the second device in the above embodiments. The communication device 1000 may include: a processor 1001, a transceiver 1002, and a memory 1003. The transceiver 1002 is configured to implement the transmitting or receiving function, such as implementing the functions of the above-mentioned receiving module 810 and/or transmitting module 910. The processor 1001 can be used to implement other processing functions or control the transmitting and/or receiving.

The processor 1001 includes one or more processing cores, and executes various functional applications and information processing by running software programs and modules.

The transceiver 1002 can include a receiver and a transmitter. For instance, the transceiver 1002 can include a wired communication component, which can include a wired communication chip and a wired interface (such as a fiber optic interface). In some embodiments, the transceiver 1002 may further include a wireless sensing component, which may include a wireless sensing chip and a radio frequency (RF) antenna.

The memory 1003 can be connected to the processor 1001 and the transceiver 1002.

The memory 1003 can be used to store a computer program executed by the processor, and the processor 1001 is used to execute the computer program, so as to implement each step performed by the first device in the above method embodiments, or to implement each step performed by the second device in the above method embodiments.

Furthermore, the memory 1003 can be implemented by any type of volatile or non-volatile storage device, or a combination thereof. The volatile or non-volatile storage device includes, but is not limited to: a magnetic or optical disk, an electrically erasable programmable read-only memory (EEPROM), an erasable programmable read-only memory (EPROM), a static random access memory (SRAM), a read-only memory (ROM), a magnetic memory, a flash memory, or a programmable read-only memory (PROM).

In some embodiments, in a case where the communication device 1000 serves as the first device, the transceiver 1002 is configured to receive first information. The first information is used to configure N first devices to receive a sensing signal, wherein N is an integer greater than 1.

In some embodiments, in a case where the communication device 1000 serves as the second device, the transceiver 1002 is configured to transmit first information. The first information is used to configure N first devices to receive a sensing signal, wherein N is an integer greater than 1.

For details not specifically mentioned in the embodiments, reference may be made to the previous embodiments, which are not described further herein.

Some embodiments of the present disclosure further provide a computer-readable storage medium storing one or more computer programs. The one or more computer programs, when executed by a processor, cause the processor to perform the aforementioned method for configuring transmission of a sensing signal on the first device side, or to implement the aforementioned method for configuring transmission of a sensing signal on the second device side. In some embodiments, the computer-readable storage medium may include: a ROM, a random-access memory (RAM), a solid-state drive (SSD), an optical disc or the like. The RAM may include a resistance random access memory (ReRAM) and a dynamic random-access memory (DRAM).

Some embodiments of the present disclosure further provide a chip. The chip includes a programmable logic circuitry and/or one or more program instructions. The chip, when running, is caused to perform the aforementioned method for configuring transmission of a sensing signal on the first device side, or to perform the aforementioned method for configuring transmission of a sensing signal on the second device side.

Some embodiments of the present disclosure further provide a computer program product. The computer program product includes one or more computer instructions stored in a computer-readable storage medium. The one or more computer instructions, when read from the computer-readable storage medium and executed by a processor, cause the processor to perform the aforementioned method for configuring transmission of a sensing signal on the first device side, or to perform the aforementioned method for configuring transmission of a sensing signal on the second device side.

It should be understood that the term "indication" mentioned in the embodiments of the present disclosure can be a direct indication, an indirect indication, or an indication that an association relationship is present. For example, "A indicates B" may mean that A directly indicates B, for example, B may be obtained from A; or may mean that A indirectly indicates B, for example, A indicates C through which B may be obtained; or may mean that an association relationship is present between A and B.

In the descriptions of embodiments of the present disclosure, the term "correspond" indicates a direct or indirect corresponding relationship between two items, or indicates an associated relationship between two items; and also indicates relationships such as indicating and being indicated, or configuring and being configured.

In some embodiments of the present disclosure, the term "predefined" can be implemented by pre-storing corresponding codes, tables, or other means that can be used to indicate relevant information in devices (e.g., including a first device and a second device). The specific implementation method is not limited in the present disclosure. For example, the term "predefined" can refer to "defined" in a protocol.

In some embodiments of the present disclosure, the term "protocol" may refer to a standard protocol in the communication field, including, for example, the LTE protocol, the NR protocol, and related protocols applicable to the future communication systems, which is not limited in the present disclosure.

The term "multiple" herein refers to two or more. The term "and/or" describes the association relationship between associated objects, indicating that there can be three types of relationships. For example, the phrase "A and/or B" means (A), (B), or (A and B). The character "/" generally indicates that the relationship between the preceding and following associated objects is an "or" relationship.

The term "greater than or equal to" herein can indicate either greater than or equal to, or simply greater than; similarly, the term "less than or equal to" can indicate either less than or equal to, or simply less than.

In addition, the step numbers described herein only exemplarily illustrate one possible execution sequence among steps. In some other embodiments, the aforementioned steps may not be executed in numerical order. For instance, two steps with different numbers may be executed simultaneously, or two steps with different numbers may be executed in an order opposite to that shown in the figure. The embodiments of the present disclosure do not impose any limitations on this.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates the transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A method for configuring transmission of a sensing signal, performed by any one of N first devices, the method comprising:
receiving first information, wherein the first information is used to configure the N first devices to receive a sensing signal, and N is an integer greater than 1.

2. The method according to claim 1, wherein the first information comprises a set of sensing configuration information, wherein the N first devices share the same set of sensing configuration information, and the sensing configuration information is used to configure the first devices to receive the sensing signal.

3. The method according to claim 1, wherein the first information comprises M sets of sensing configuration information, one of the M sets of sensing configuration information corresponds to one or more of the N first devices, and each of the M sets of sensing configuration information is used to configure a corresponding first device to receive the sensing signal, wherein M is an integer greater than 1 and less than or equal to N.

4. The method according to claim 3, wherein in a case where M is equal to N, the first information comprises N sets of sensing configuration information;
an arrangement order of the N sets of sensing configuration information in the first information is determined based on an order of the N first devices in a device list, wherein the device list is used to indicate the N first devices; or
an arrangement order of the N sets of sensing configuration information in the first information is determined based on identifier information of the N first devices.

5. The method according to any one of claims 2 to 4, wherein the sensing configuration information is used to configure at least one of: enabling reception of the sensing signal, a time-domain position of the sensing signal, a frequency-domain position of the sensing signal, or whether the sensing signal is periodic.

6. The method according to any one of claims 1 to 5, wherein the N first devices are configured to decode the first information using a same Radio Network Temporary Identifier (RNTI).

7. The method according to any one of claims 1 to 6, further comprising:
receiving second information, wherein the second information is used to configure the first information.

8. The method according to claim 7, wherein the second information is used to configure at least one of:
a composition mode of the first information;
a transmission mode of the first information;
a number of bits of the first information;
a device list corresponding to the first information, the device list being used to indicate the N first devices;
a device quantity corresponding to the first information, wherein the device quantity refers to a number of the first devices receiving the first information;
a number of bits for each of one or M sets of sensing configuration information in the first information, wherein M is an integer greater than 1 and less than or equal to N; or
a position of sensing configuration information corresponding to the first device receiving the second information in the first information.

9. The method according to any one of claims 1 to 8, wherein the first information is transmitted over any one of a broadcast channel, a multicast channel, or a downlink control channel.

10. The method according to any one of claims 1 to 9, wherein the first information is further used to configure a third device to transmit the sensing signal.

11. The method according to claim 10, wherein
the third device and the first device are configured to decode the first information using a same RNTI; or
the third device and the first device are configured to decode the first information using different RNTIs.

12. The method according to any one of claims 1 to 11, wherein
the N first devices are configured to receive a same sensing signal; or
the N first devices are configured to receive different sensing signals.

13. The method according to any one of claims 1 to 12, wherein the N first devices are determined based on at least one of: a location of each of the first devices, a distance between each of the first devices and a third device, a link status between each of the first devices and a third device, or a sensing service requirement, wherein the third device is configured to transmit the sensing signal.

14. A method for configuring transmission of a sensing signal, performed by a second device, the method comprising:
transmitting first information, wherein the first information is used to configure N first devices to receive a sensing signal, wherein N is an integer greater than 1.

15. The method according to claim 14, wherein the first information comprises a set of sensing configuration information, wherein the N first devices share the same set of sensing configuration information, and the sensing configuration information is used to configure the first devices to receive the sensing signal.

16. The method according to claim 14, wherein the first information comprises M sets of sensing configuration information, one of the M sets of sensing configuration information corresponds to one or more of the N first devices, and each of the M sets of sensing configuration information is used to configure a corresponding first device to receive the sensing signal, wherein M is an integer greater than 1 and less than or equal to N.

17. The method according to claim 16, wherein in a case where M is equal to N, the first information comprises N sets of sensing configuration information;
an arrangement order of the N sets of sensing configuration information in the first information is determined based on an order of the N first devices in a device list, wherein the device list is used to indicate the N first devices; or
an arrangement order of the N sets of sensing configuration information in the first information is determined based on identifier information of the N first devices.

18. The method according to any one of claims 15 to 17, wherein the sensing configuration information is used to configure at least one of: enabling reception of the sensing signal, a time-domain position of the sensing signal, a frequency-domain position of the sensing signal, or whether the sensing signal is periodic.

19. The method according to any one of claims 14 to 18, wherein the N first devices are configured to decode the first information using a same Radio Network Temporary Identifier (RNTI).

20. The method according to any one of claims 14 to 19, further comprising:
transmitting second information, wherein the second information is used to configure the first information.

21. The method according to claim 20, wherein the second information is used to configure at least one of:
a composition mode of the first information;
a transmission mode of the first information;
a number of bits of the first information;
a device list corresponding to the first information, the device list being used to indicate the N first devices;
a device quantity corresponding to the first information, wherein the device quantity refers to a number of the first devices that receive the first information;
a number of bits for each of one or N sets of sensing configuration information in the first information; or
a position of sensing configuration information corresponding to a first device receiving the second information in the first information.

22. The method according to any one of claims 14 to 21, wherein the first information is transmitted over any one of a broadcast channel, a multicast channel, or a downlink control channel.

23. The method according to any one of claims 14 to 22, wherein the first information is further used to configure a third device to transmit the sensing signal.

24. The method according to claim 23, wherein
the third device and the first device are configured to decode the first information using a same RNTI; or
the third device and the first device are configured to decode the first information using different RNTIs.

25. The method according to any one of claims 14 to 24, wherein
the N first devices are configured to receive a same sensing signal; or
the N first devices are configured to receive different sensing signals.

26. The method according to any one of claims 14 to 25, wherein the N first devices are determined based on at least one of: a location of each of the first devices, a distance between each of the first devices and a third device, a link status between each of the first devices and a third device, or a sensing service requirement, wherein the third device is configured to transmit the sensing signal.

27. An apparatus for configuring transmission of a sensing signal, comprising:
a receiving module, configured to receive first information, wherein the first information is used to configure N first devices to receive a sensing signal, N being an integer greater than 1.

28. An apparatus for configuring transmission of a sensing signal, comprising:
a transmitting module, configured to transmit first information, wherein the first information is used to configure N first devices to receive a sensing signal, N being an integer greater than 1.

29. A communication device, comprising a processor and a memory, wherein the memory is configured to store one or more computer programs, which when executed by the processor, cause the communication device to perform the method according to any one of claims 1 to 13, or to perform the method according to any one of claims 14 to 26.

30. A computer-readable storage medium, storing one or more computer programs, which when executed by a processor, cause the processor to perform the method according to any one of claims 1 to 13, or to perform the method according to any one of claims 14 to 26.

31. A chip, comprising programmable logic circuitry and/or one or more program instructions, wherein the chip, when running, is caused to perform the method according to any one of claims 1 to 13, or to implement the method according to any one of claims 14 to 26.

32. A computer program product, comprising one or more computer instructions stored in a computer-readable storage medium, wherein the one or more computer instructions, when read from the computer-readable storage medium and executed by a processor, cause the processor to perform the method according to any one of claims 1 to 13, or to implement the method according to any one of claims 14 to 26.
